# FASCICULE DE BREVET EUROPEEN

(11) **EP 2 198 683 B1**
(45) Date de publication et mention de la délivrance du brevet: **08.02.2012**
(21) Numéro de dépôt: 09178557.6
(22) Date de dépôt: 09.12.2009
(51) Int. Cl.: A01C 17/00, A01B 79/00

(54) **Système automatisé de distribution de particules pour machine agricole, module et procédé correspondants**
System für die automatische Verteilung von Partikeln für landwirtschaftlichen Maschinen, Verfahren und entsprechendes Modul
System for the automatic distribution of particles for an agricultural machine, and the corresponding module and method

(30) Priorité: 19.12.2008 FR 0807261
(43) Date de publication de la demande: 23.06.2010
(60) Demande divisionnaire: 11183547.6
(73) Titulaire: Sulky Burel, 35220 Chateaubourg (FR)
(72) Inventeur: Leveille, Lionel, 35500 Vitré (FR); Clochard, Daniel, 35113, Domagne (FR)
(74) Mandataire: Bioret, Ludovic

(56) Documents cités:
- EP-A- 0 843 958
- EP-A- 1 692 928
- US-A- 6 122 581

## Description

### 1. domaine de l'invention

Le domaine de l'invention est celui de la distribution de particules pour l'agriculture, c'est-à-dire de produits se présentant sous une forme granulaire, et notamment d'engrais solide ou de graines.

Plus précisément, l'invention concerne le contrôle de la distribution de particules assuré par une machine agricole, et en particulier l'optimisation de la distribution dans les zones proches de la bordure, d'une pointe ou du bout d'un champ à traiter.

Par la suite, on considère plus précisément le cas de l'épandage d'engrais solide. Il est clair cependant que l'approche de l'invention peut être généralisée à d'autres types de particules, et notamment aux graines.

### 2. art antérieur

### 2.1 principe de l'épandage de particules

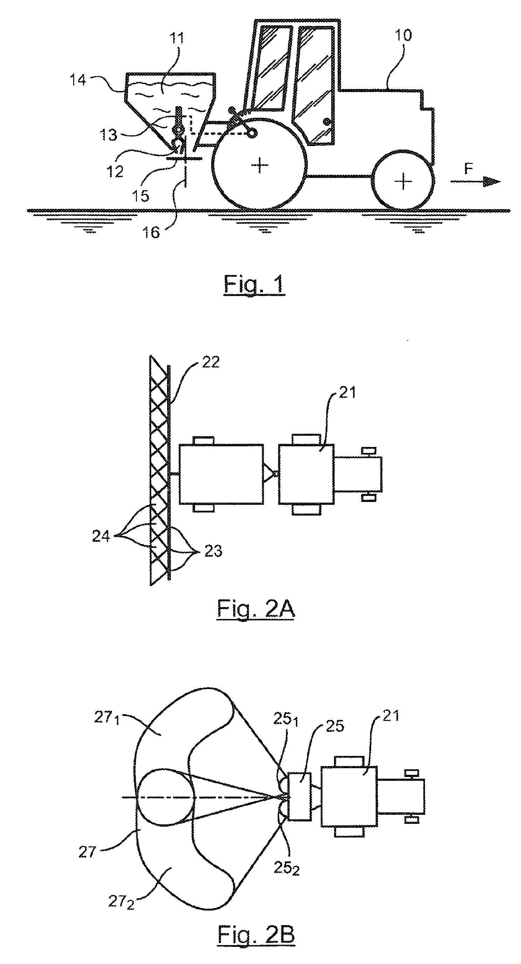

Un exemple de machine permettant d'épandre de l'engrais solide ou des semis sur une parcelle cultivable est illustré schématiquement sur la figure 1. Elle se présente sous la forme d'un tracteur 10 équipé d'une trémie 11 contenant l'engrais ou les graines 14 à épandre.

Le fond de la trémie 11 comprend deux ouvertures, puis deux dispositifs d'alimentation réglables, puis deux dispositifs de réglage de la distribution de l'engrais se présentant par exemple sous la forme de goulottes 13 (une seule étant illustrée), laissant passer des particules contenues 14 dans la trémie 11, et placé en surplomb de deux distributeurs comprenant chacun un disque rotatif 15 portant des pales de projection.

Les disques 15 sont le plus souvent disposés dans une position sensiblement horizontale et leur rotation autour d'un axe 16 sensiblement vertical assure la projection du contenu 14 de la trémie par effet centrifuge, sous la forme d'une nappe, en forme générale de croissant, s'étendant à l'arrière de la machine d'épandage.

Les deux disques rotatifs tournent en sens inverses l'un par rapport à l'autre, ce qui permet de réaliser un épandage en engrais et/ou en semis sur une grande largeur, classiquement comprise entre 5 et 50 mètres.

De telles machines d'épandage permettent de traiter une parcelle de terrain cultivable, ou champ, le plus souvent en suivant un trajet prédéfini d'aller/retour sur celle-ci mais aussi avec des trajectoires non imposées (par exemple pour l'épandage sur prairie).

Le conducteur de la machine peut adapter certains réglages d'épandage, tels que, selon les cas, la quantité ou le poids de particules distribuées, la forme de la nappe d'épandage, et notamment sa largeur,... Il peut par ailleurs ouvrir ou fermer sélectivement le dispositif d'alimentation 13, de façon à optimiser les quantités de particules épandues, notamment en fourrière, en bordure, en bout ou en pointe de champ.

En effet, par exemple, lorsque le tracteur fait demi-tour en bout de champ, et si l'épandage n'est pas interrompu, certaines zones vont recevoir une quantité de particules supérieures à ce qui était souhaité, et une partie de ces particules va être distribuée dans des zones « hors champ ». Le conducteur doit donc interrompre sélectivement la distribution à droite et/ou à gauche, lorsque ceci est nécessaire. Cette opération se fait généralement au jugé, en tenant compte de l'écart entre la position du tracteur et celle de la nappe, ce qui suppose une grande expérience du conducteur, et induit dans tous les cas des imprécisions.

Un problème similaire se pose lorsque le tracteur s'arrête, ou ralentit. Il faut alors fermer les distributeurs.

Bien sûr, le conducteur doit également ré-ouvrir le dispositif d'alimentation des distributeurs dès que cela est nécessaire, avec les mêmes difficultés de détermination de l'instant précis où il faut le faire.

Au final, la technique actuelle suppose une grande attention et expérience du conducteur, et conduit dans tous les cas à des surdosages et des sous-dosages ponctuels, c'est-à-dire à des défauts d'homogénéité. Le plus souvent, les conducteurs ont tendance à surdoser, par sécurité.

On constate pourtant qu'un tel surdosage est non seulement coûteux, mais également néfaste. Par exemple, un surdosage d'azote sur du blé tendre favorise la verse, réduit l'efficacité de l'azote apporté en favorisant son stockage précoce dans des organes improductifs et favorise le développement précoce de maladies, telles que le piétin-verse ou l'oïdium. Ceci est également en contradiction avec les exigences environnementales.

### 2.2 tentatives d'automatisation

Il a été proposé, notamment dans le document de brevet EP-1692929, une technique de gestion automatisée des bouts de champs sous pilotage GPS. Ce système nécessite un enregistrement de données dans un ordinateur de bord, et prévoit des coupures et départs automatiques en bout de champ. Il s'agit d'un système spécifique, nécessitant des moyens spécifiques de commande alimentés par un récepteur GPS, et dédiés à un distributeur particulier de cette société. De ce fait, il s'avère très coûteux en fabrication et à la vente, et est donc très peu présent sur le marché.

Le Demandeur a également développé une technique, décrite notamment dans le document de brevet EP1504645, visant à contrôler l'épandage au niveau des pointes de champ. Il s'agit d'un système efficace, mais, de même que le système précédent, dédié et coûteux.

Il existe par ailleurs des systèmes permettant d'automatiser la pulvérisation de produits liquides, connus sous les termes de « barres de guidage + coupure de tronçons ». Un pulvérisateur met en oeuvre une rampe de pulvérisation, que l'on peut décomposer en plusieurs tronçons. Plusieurs sociétés proposent des ensembles « barre de guidage + coupure », c'est-à-dire des systèmes pilotés par des moyens de géolocalisation (GPS) permettant d'activer sélectivement ces tronçons de pulvérisation en fonction de la position de la machine dans le champ. Un exemple d'un tel système est décrit dans le document de brevet EP-0373034. Ces systèmes donnent généralement satisfaction à leurs utilisateurs, mais sont spécifiquement dédiés à la pulvérisation.

Du document US 6 122 581 il est connu de contrôler d'une part des épandeur et d'autre des pulvérisateurs dans une même machine, mais de manière parallèle et alternative.

### 3. inconvénients de l'art antérieur

Le contrôle manuel de l'ouverture et de la fermeture de l'alimentation des distributeurs n'est pas optimal (en termes de coût, d'efficacité, d'écologie, ...), comme expliqué plus haut, et suppose une bonne expérience des conducteurs.

Une automatisation est donc souhaitable. Cependant, les systèmes connus sont spécifiques et coûteux. Les utilisateurs sont peu enclins à acquérir un système dédié et très cher, notamment lorsqu'ils ont déjà investi dans l'achat d'un ensemble « barre de guidage + coupure de tronçons » pour le pulvérisateur.

### 4. objectifs de l'invention

L'invention a donc pour objectif de pallier ces inconvénients de l'art antérieur.

Plus précisément, un objectif de l'invention est de proposer une technique permettant, de façon simple et peu coûteuse, une amélioration, c'est-à-dire une optimisation, de l'épandage de particules, telles que de l'engrais solide ou des graines, notamment en bordure, en bout et en pointe de champ

Ainsi, l'invention a pour objectif, selon les modes de réalisation, est de permettre la mise en oeuvre d'une agriculture raisonnée, réduisant et optimisant l'usage d'engrais, réduisant les risques verses et certaines maladies, ...

L'invention a également pour objectif d'améliorer le confort de travail du conducteur, et d'augmenter sa sécurité et son efficacité, en lui permettant notamment de se concentrer sur la conduite.

Un autre objectif de l'invention, selon au moins un mode de réalisation, est de fournir une technique pouvant être mise en oeuvre avec des matériels de différentes origines, et ne nécessitant pas de moyens mécaniques ou informatiques lourds et spécifiques. Notamment, selon au moins un mode de réalisation, un objectif de l'invention est de permettre l'utilisation de distributeurs classiques, dont les plateaux sont entraînés par la prise de force du tracteur.

### 5. résumé de l'invention

Ces objectifs, ainsi que d'autres qui apparaîtront par la suite, sont atteints à l'aide d'un système de distribution de particules pour machine agricole selon la revendication 1, comprenant au moins deux distributeurs de particules équipés chacun d'au moins un dispositif d'alimentation dont l'ouverture et la fermeture sont contrôlées par un premier actionneur, coopérant avec un ensemble de gestion de pulvérisation, contrôlant des pulvérisateurs et comprenant une barre de guidage alimentée par des moyens de géolocalisation et des moyens de coupure de tronçons, recevant des signaux de contrôle de l'ouverture et/ou de la fermeture desdits tronçons.

Selon l'invention, ce système comprend un module autonome de pilotage de la distribution de particules, contrôlant l'ouverture et de la fermeture desdits dispositifs d'alimentation, ledit module comprenant :
- des moyens de réception desdits signaux de contrôle de l'ouverture et/ou de la fermeture de tronçons dudit ensemble de gestion de pulvérisation, et
- des moyens de conversion desdits signaux de contrôle en des commandes d'ouverture et de fermeture desdits premiers actionneurs,
   de façon que lesdits actionneurs soient commandés à partir de signaux de contrôle générés par ladite barre de guidage et destinés à l'origine à la pulvérisation.

Ainsi, l'invention permet de s'affranchir de la mise en oeuvre d'un système dédié, lourd et coûteux pour l'automatisation de l'épandage de particules. En effet, peu d'adaptations sont nécessaires sur la plupart des distributeurs, qui sont d'ores et déjà équipés de trappes. De même, l'invention exploite des informations fournies par une barre de guidage (ce terme peut englober, dans les revendications, la barre de guidage proprement dite et les moyens de coupure de tronçons associés) classique, et il n'est en conséquence pas nécessaire de prévoir des moyens de géolocalisation et des moyens de traitement spécifiques.

L'invention repose donc sur l'adaptation et la conversion de signaux, destinés à l'origine à une rampe de pulvérisation, et produits par une barre de guidage, en des commandes destinées à des actionneurs dédiés à des moyens de distribution de particules, tels qu'un épandeur.

Il est important de noter que cette approche, malgré son apparente simplicité, n'est nullement évidente. En effet, la pulvérisation et l'épandage, ou plus généralement la distribution, de particules sont des opérations et des techniques très différentes, tant sur le plan des moyens mécaniques utilisés que de leurs mises en oeuvre. De ce fait, comme expliqué plus haut, les fabricants ont toujours favorisés des systèmes complètement indépendants.

De même, les caractéristiques d'une zone couverte par un pulvérisateur sont très différentes de la forme d'une nappe d'épandage de particules et de sa distance par rapport au tracteur. Des informations spécifiques de paramétrage, disponibles par exemple sous la forme d'abaques détaillant les valeurs spécifiques à l'épandeur qu'il faut paramétrer dans la barre de guidage (par exemple : distance avant/arrière/droite/gauche, temps de réaction, taux de recouvrement...). Ainsi, l'invention propose de « leurrer » la barre de guidage, afin de piloter un distributeur de particules à l'aide de commandes en principe dédiées à un pulvérisateur.

En outre, l'actionnement de tronçons de rampes rectilignes de pulvérisation par des signaux électriques nécessitent des modifications spécifiques pour la commande des actionneurs.

Selon un mode de réalisation avantageux, le système de l'invention comprend également des moyens de pilotage manuel de l'ouverture et de la fermeture desdits dispositifs d'alimentation.

Le conducteur peut alors agir sur la distribution de façon manuelle, en cas de besoin, indépendamment des commandes délivrées par le système.

Selon un mode de réalisation simplifié, le système fonctionne en tout ou rien, chaque dispositif d'alimentation pouvant être ouvert (ouverture maximale) ou fermé (fermeture totale).

Selon un autre mode de réalisation, ledit système comprenant un dispositif de réglage de la largeur de la distribution, ledit module autonome est apte à délivrer une commande d'ouverture totale ou partielle et une commande de fermeture totale ou partielle, et peut contrôler des actionneurs secondaires agissant sur lesdits dispositifs de réglage de largeur de distribution.

Pour permettre une utilisation aisée des deux applications (pulvérisation et distribution de particules) permises grâce à l'invention à l'aide d'une unique barre de guidage à l'origine dédiée à la pulvérisation, le système peut comprendre des moyens de connexion sélective d'un faisceau de câbles issu de ladite barre de guidage d'une part à des moyens de contrôle desdits pulvérisateurs, et d'autre part audit module de pilotage automatique.

Selon un mode de réalisation de l'invention, lesdits moyens de conversion associe à un signal de contrôle d'ouverture ou de fermeture de tronçons une commande de contrôle d'une quantité de particules à fournir à chaque distributeur.

Il est ainsi possible d'adapter la quantité de particules à la surface à traiter, et donc d'éviter des surdosages.

Selon un autre aspect de l'invention, lesdits moyens de conversion peuvent associer à un signal de contrôle d'ouverture ou de fermeture de tronçons au moins une des commandes appartenant au groupe comprenant :
- une commande de réglage de la position d'un point de chute desdites particules, par exemple une commande de réglage de la position d'une goulotte, associée à chaque distributeur ;
- une commande d'arrêt ou d'activation du moteur de chaque distributeur ;
- une commande de réglage de la vitesse de rotation de chaque distributeur ;
- une commande de réglage de l'inclinaison de chaque distributeur.

Ceci permet, également, d'affiner l'épandage. Notamment, la position de la goulotte peut permettre de déplacer la zone d'épandage, par rapport au tracteur, et/ou de modifier sa surface.

Selon les utilisations, lesdites particules peuvent notamment appartenir au groupe comprenant les engrais solides, les semis, les produits anti-limaces, le sel, les graviers.

Dans un mode de réalisation particulier de l'invention, le système de distribution de particules peut comprendre, ou coopérer avec, des moyens de pesage desdites particules, un capteur de vitesse, ...

Ces informations complémentaires permettent d'optimiser la distribution.

Selon une autre caractéristique optionnelle, le système peut comprendre, ou coopérer avec, des moyens de mise en oeuvre sélective d'une pale de détourage sur chacun desdits distributeurs, configurée de façon à modifier la forme de la nappe d'épandage.

On peut ainsi commencer par réaliser le tour du champ de façon classique (par exemple à droite avec le dispositif de bordure « Tribord » (marque déposée) produit par le demandeur de la présente demande de brevet, et décrit notamment dans le document de brevet EP-1336332), puis le module de pilotage devient actif selon le principe de l'invention ensuite, en plein champ. Bien sûr, cette étape préalable de détourage est optionnelle.

L'invention concerne également les modules autonomes de pilotage automatique de la distribution de particules mis en oeuvre dans un système de distribution de particules pour machine agricole comprenant au moins deux distributeurs de particules équipés chacun d'au moins un dispositif d'alimentation dont l'ouverture et la fermeture sont contrôlées par un premier actionneur.

Ce module contrôle l'ouverture et de la fermeture desdits dispositifs d'alimentation en fonction de signaux de contrôle délivrés par un ensemble comprenant une barre de guidage alimentée par des moyens de géolocalisation et des moyens de coupure de tronçons, et destinés à contrôler des pulvérisateurs, et comprenant des moyens de conversion desdits signaux de contrôle en des commandes d'ouverture et de fermeture desdits premiers actionneurs.

Un tel module peut notamment comprendre, selon les modes de réalisation, au moins un des éléments suivants :
- des moyens de pilotage manuel de l'ouverture et de la fermeture desdits dispositifs d'alimentation ;
- des moyens de gestion de la fin de course et de détection de panne de chacun desdits actionneurs ;
- des moyens d'indication de la position ouverte ou fermée desdits dispositifs d'alimentation.

L'invention concerne également un procédé de distribution de particules mettant en oeuvre un tel module de pilotage automatique et comprenant les étapes suivantes :
- réception de signaux de contrôle délivrés par une barre de guidage alimentée par des moyens de géolocalisation et des moyens de coupure de tronçons, destinés à contrôler des pulvérisateurs ;
- conversion desdits signaux de contrôle en des commandes d'ouverture et de fermeture desdits premiers actionneurs ;
- ouverture et/ou fermeture desdites trappes en fonction desdites commandes.

Avantageusement, ce procédé comprend en outre une étape préalable de réglage de ladite barre de guidage, dans laquelle les paramètres normalement destinés au contrôle de pulvérisateurs sont adaptés à une nappe d'épandage de particules ou à une nappe de distribution d'un semoir, par exemple un semoir à céréales.

Cette étape de réglage peut notamment comprendre la configuration d'au moins les paramètres suivants :
- largeur de la nappe ;
- distance entre la position d'une antenne de géolocalisation et le coeur de la nappe générée par chacun desdits disques ;
- pourcentage de recouvrement souhaité dans une pointe de champ ;
- temps d'anticipation de la réaction des actionneurs, notamment pour compenser l'effet de la vitesse moyenne d'avancement ;
- le nombre de tronçons équivalent au distributeur de particules, par exemple deux, un à droite et un à gauche) pour un fonctionnement tout ou rien.

Selon un mode de réalisation particulier, le procédé comprend une étape de contrôle de l'ouverture desdits dispositifs de distribution, de façon que celle-ci puisse prendre au moins une position d'ouverture intermédiaire, et/ou de la position d'une goulotte, de façon à modifier un angle moyen d'éjection en fonction desdits signaux de contrôle.

Il est ainsi possible de contrôler plus précisément l'épandage, notamment dans les bords de champ en pointe.

### 6. liste des figures

D'autres caractéristiques et avantages de l'invention apparaîtront plus clairement à la lecture de la description suivante d'un mode de réalisation préférentiel de l'invention, donné à titre d'exemple illustratif et non limitatif, faite en référence aux dessins annexés parmi lesquels :
- -Les figures 2A et 2B représentent schématiquement, vu du dessus, les surfaces couvertes par un pulvérisateur contrôlé par une barre de guidage, de façon connues (figure 2A), et par des moyens d'épandage de particules à l'aide de la même barre de guidage, selon l'invention (figure 2B) ;
- La figure 3 présente schématiquement le principe de mise en oeuvre de l'invention, dans un premier mode de réalisation ;
- La figure 4 présente un deuxième mode de réalisation, mettant en oeuvre un boîtier électronique de réglage et de contrôle de l'épandage ;
- La figure 5 illustre les moyens essentiels de l'invention, dans le mode de réalisation de la figure 3 ;
- Les figures 6A et 6B présentent l'actionnement des trappes de débit, illustrées respectivement en position fermée (figure 6A) et ouverte (figure 6B) ;
- La figure 7 est un schéma synoptique simplifié du procédé de l'invention ;
- la figure 8 illustre un exemple de contrôle optimisé de la distribution de particules, avec une variation progressive de la forme de la nappe en fonction d'un signal délivré par une barre de guidage ;
- la figure 9 illustre la construction de la nappe d'épandage, pour la mise en oeuvre du contrôle de la distribution de la figure 8.

### 7. Description d'un mode de réalisation de l'invention

### 7.1 principes de l'invention

Comme indiquée plus haut, l'invention repose notamment sur l'utilisation d'une barre de guidage (ce terme peut englober, dans les revendications, la barre de guidage proprement dite et les moyens de coupure de tronçons associés) destinée à contrôler un pulvérisateur, à un système d'épandage de particules (notamment d'engrais solide ou de semis). Les coupures de tronçons pour pulvérisateur sont bien connues, depuis plus de 20 ans, et la solution de l'invention peut s'adapter à toutes les barres de guidage actuellement commercialisées avec ses coupures de tronçons.

La figure 2A illustre, de façon schématique, un tracteur 21 équipé d'une rampe de pulvérisation 22, comprenant une pluralité de tronçons 23, permettant chacun de couvrir une surface sensiblement triangulaire 24, de façon que la surface couverte globale soit sensiblement homogène et de forme sensiblement rectangulaire.

Le tracteur 21 est donc équipé de moyens de coupure des tronçons de rampe de pulvérisation 23, qui sont de plus en plus courants sur les exploitations. Un exemple de tels moyens de pilotage automatique est le système « Accuboom » (marque déposée).

Ces moyens de coupure des tronçons assurent sélectivement l'ouverture ou la fermeture de chaque tronçon 23, pour adapter la forme de la surface pulvérisée. Il fonctionne en tenant compte de signaux délivrés par barre de guidage elle-même associée à des moyens de géolocalisation (GPS par exemple).

L'invention propose donc une solution simple et efficace pour réutiliser, et adapter, ces moyens de pilotage automatique à l'épandage de particules, comme illustré par la figure 2B.

Sur cette figure 2B, le tracteur 21 ne transporte plus une rampe de pulvérisation 22, mais des moyens de distribution de particules 25, et par exemple d'engrais granulés ou de semis. Il est équipé de deux distributeurs alimentant deux disques 26₁ et 26₂, qui assurent la projection des particules respectivement sur des surfaces 27₁ et 27₂, définissant ensemble une surface de couverture 27, éloignée de 5 à 20 m des moyens de distribution 25, et définissant une forme générale de croissant.

Comme on le voit clairement dans les figures 2A et 2B, les surfaces couvertes par le pulvérisateur 22 d'une part, et par les moyens de distribution 25 d'autre part, sont très différentes, par leur forme et par leur position par rapport au tracteur.

Selon l'invention, on exploite cependant les informations fournies par la barre de guidage au moyen de pilotage des tronçons de la rampe de pulvérisation, après avoir d'une part, adapté le paramétrage, et d'autre part transformé les signaux, de façon qu'ils puissent piloter des actionneurs, tels que des vérins électriques par exemple.

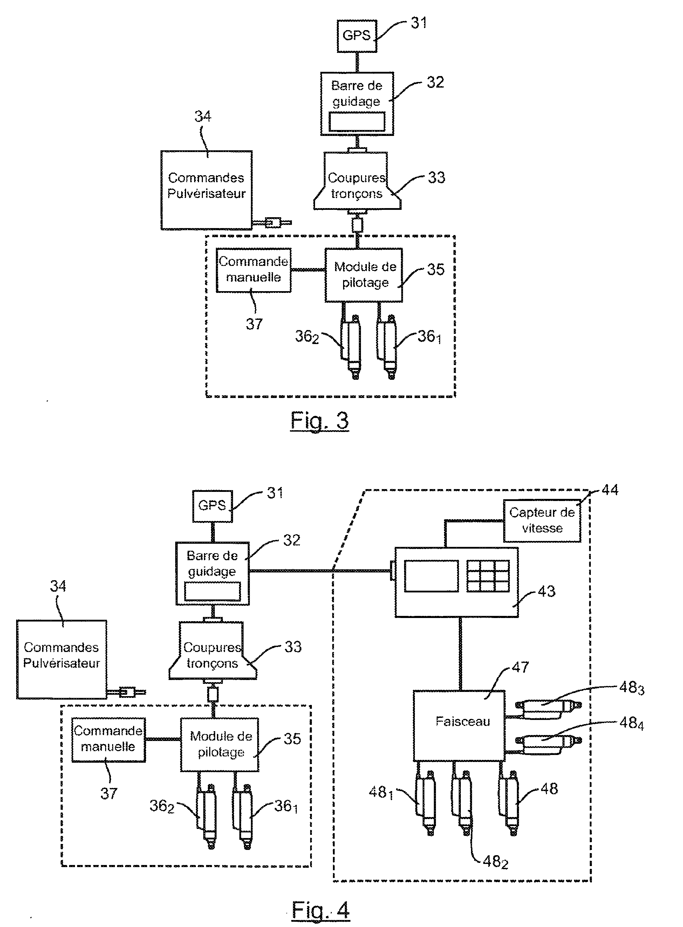

Ainsi que cela est illustré schématiquement en figure 3, un équipement classique pour le contrôle d'une rampe de pulvérisation comprend des moyens de géolocalisation 31, généralement sous la forme d'une antenne placée sur le tracteur et d'un module GPS.

Il comprend ensuite une barre de guidage 32, qui délivre des informations, en fonction de la géolocalisation, à des moyens 33 de coupure des tronçons de la rampe de pulvérisation (« Accuboom » par exemple).

Quand l'utilisateur souhaite pulvériser, ces moyens de coupure 33 sont connectés directement à des électrovannes 34 du pulvérisateur 22, qui assure l'ouverture ou la fermeture de chacun des tronçons, en fonction de la position du tracteur.

Selon l'invention, lorsque l'utilisateur souhaite distribuer des particules, il déconnecte simplement les moyens de commande 34 du pulvérisateur, et connecte à la place un module 35 de pilotage de l'ouverture et de la fermeture de dispositifs d'alimentation, par exemple des trappes, assurant l'alimentation de particules des disques 26₁et 26₂. Ce module 35 peut comprendre notamment des relais doubles, permettant l'actionnement de vérins électriques 36₁ et 36₂.

Ces vérins 36₁ et 36₂ sont préférentiellement des vérins rapides, permettant une ouverture et fermeture quasi instantanée des trappes, de façon que le début ou l'interruption de l'épandage soit également quasi instantanée. En cas de besoin, on peut prévoir de paramétrer un temps de réaction des actionneurs, pour anticiper l'ouverture ou la fermeture.

Les moyens électroniques 35 comprennent, par ailleurs, des moyens de détection de fin de course des vérins, ou plus généralement des actionneurs, (pour interrompre leur alimentation lorsqu'ils sont arrivés en fin course d'ouverture ou de fermeture) et des moyens de détection d'anomalie ou de panne dans ses vérins.

Par ailleurs, un boîtier de commande manuelle 37 peut être prévu, de façon à permettre à l'utilisateur de forcer la mise en oeuvre des actionneurs 36₁ et 36₂, et donc l'ouverture ou la fermeture des trappes correspondantes, en cas de besoin, et indépendamment des commandes générées par les moyens 33 de pilotage des rampes de pulvérisation.

Selon une variante de l'invention, illustrée par la figure 4, la barre de guidage 32 peut être connectée directement à un module de réglage et de contrôle 43 (par exemple du type « Vision » (marque déposée) distribué par le titulaire de la présente demande de brevet), qui peut lui-même être alimenté par différents capteurs, et notamment par un capteur de vitesse 44 (information de vitesse qui peut avantageusement être délivrée directement par la barre de guidage), un capteur de pesée...

Ce boîtier 43 est connecté à des seconds actionneurs 48₁ et 48₂, par l'intermédiaire d'un faisceau électrique 47. Ces seconds actionneurs 48₁ et 48₂ permettent de gérer le débit en fonction de la vitesse d'avancement et/ou du poids en trémie... Ce sont des actionneurs à faible vitesse, offrant une grande précision, alors que le module 35 agit sur les premiers actionneurs 36₁ et 36₂, plus rapides.

On rappelle que le pilotage des premiers actionneurs à partir des informations de contrôle des tronçons n'est pas trivial. En effet, le nombre de tronçons (classiquement 6, 8, 10 ou plus) est distinct du nombre de premiers actionneurs (un par disque, soit deux), et les nappes résultantes sont très différentes.

En outre, dans ce mode de réalisation (de même que dans le précédent), il est possible que les vérins 36₁ et 36₂ ne soient pas pilotés en « tout ou rien » (ouverture ou fermeture), mais qu'ils permettent au contraire des ouvertures et fermetures partielles de la trappe permettant ainsi un réglage du débit, sélectivement pour chaque nappe 27₁, 27₂.

Dans ce cas, on pourra paramétrer la présence de plusieurs (au moins deux) tronçons de pulvérisation de chaque côté du distributeur, et modifier le débit en fonction du nombre de tronçons pour lesquels une commande d'ouverture est reçue. Dans le cas simplifié où le distributeur fonctionne en mode « tout ou rien » (chaque côté pouvant seulement être ouvert ou fermé), on fixe le nombre total de tronçons à deux (un pour chaque côté).

On peut également prévoir, dans un mode de réalisation particulier, que le boîtier 43 puisse commander, par l'intermédiaire d'actionneurs supplémentaires 48₃, 48₄, le réglage du point d'alimentation associé à chaque disque, de façon à modifier la forme de la nappe, et donc sa largeur, en relation avec les informations reçues par les moyens de coupure 33. On peut également commander la vitesse et/ou l'inclinaison du disque, par exemple, pour modifier la position de la nappe par rapport au tracteur.

Par ailleurs, le boîtier 43 peut, dans un mode de réalisation particulier, contrôler, par l'intermédiaire d'un actionneur supplémentaire 48, la mise en oeuvre d'une pale de détourage associée à aux moins un des disques, de façon à modifier la forme de la nappe d'épandage, en particulier en bordure de champ. Un exemple d'une telle pale de détourage est connu sous le nom de « Tribord » (marque déposée), distribué par le titulaire de la présente demande de brevet.

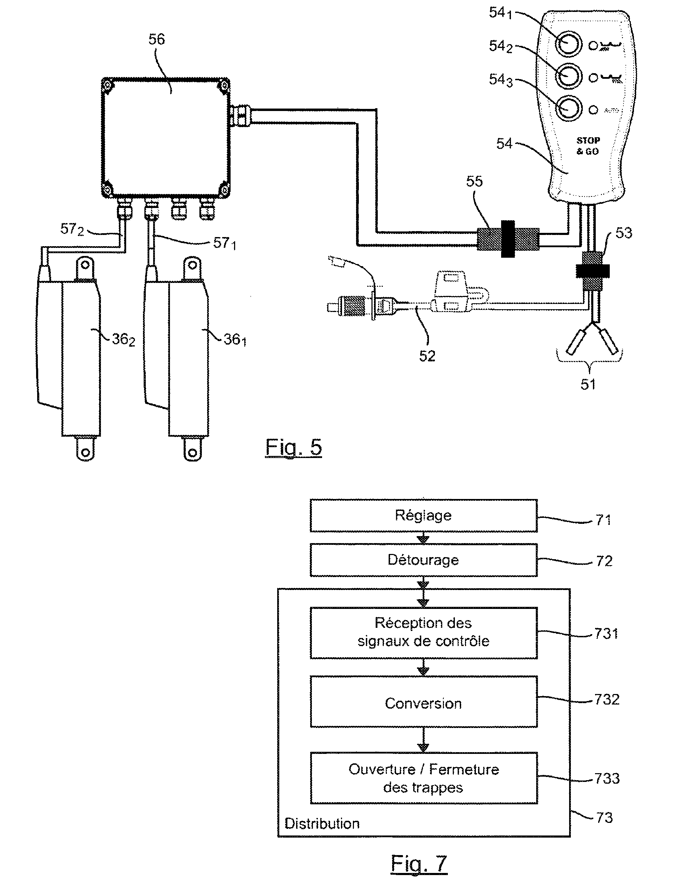

La figure 5 illustre, de façon plus détaillée, les éléments nouveaux de l'invention, dans le mode de réalisation de la figure 3. Plus précisément, la figure 5 illustre la partie encadrée en pointillés de la figure 3.

Le système comprend donc, tout d'abord, des moyens de connexion 51 aux moyens de coupure des tronçons 33 (et/ou à la barre de tirage 32, selon les modes de réalisation).

Ces moyens de connexion 51 peuvent être variables, selon les différents fabricants de barre de guidage.

Les moyens pour la mise en oeuvre de l'invention pourront être conçus de façon à disposer de diverses connectiques ou d'adaptateurs, de façon que l'ensemble des éléments de la figure 5 puissent être mis en oeuvre indépendamment de l'origine de la barre de guidage. Ainsi, on dispose d'une solution simple et peu coûteuse, et quasi universelle, pour l'épandage, dès lors que le tracteur est déjà équipé de moyens de contrôle de la pulvérisation par géolocalisation.

Le système comprend, bien sûr, des moyens 52 de connexion à une alimentation, par exemple de 12 volts correspondant à la batterie du tracteur.

La connectique 51 et l'alimentation 52 sont reliées par l'intermédiaire d'un connecteur 53, à un boîtier de commande manuelle, qui pourra être placé sur le tableau de bord du tracteur, et qui comprend, dans le mode de réalisation illustré, trois boutons :
- 54₁ : ouverture/fermeture de la trappe d'alimentation du disque de gauche ;
- 54₂ ouverture/fermeture de la trappe d'alimentation du disque de droite ;
- 54₃ : marche/arrêt du mode automatique, piloté par la barre de guidage.

Des diodes LED peuvent être associées au trois boutons pour signaler l'état des actionneurs, et être allumées pour signaler une alarme, en cas de problème.

Ce boîtier de commande manuelle 54 est relié, par l'intermédiaire d'un connecteur 55 au module électronique 56.

Ce module 56 présente deux sorties 57₁, 57₂, pilotant les vérins 36₁, 36₂, par l'intermédiaire de relais doubles. Le module 56 est donc adapté pour transformer les signaux reçus en commandes de relais, prendre en compte les commandes manuelles, et assurer la sécurité, en gérant notamment les fins de course des vérins (et en interrompant les alimentations des vérins en fin de course) et en détectant les problèmes éventuels, tels qu'un blocage intempestif d'un vérin.

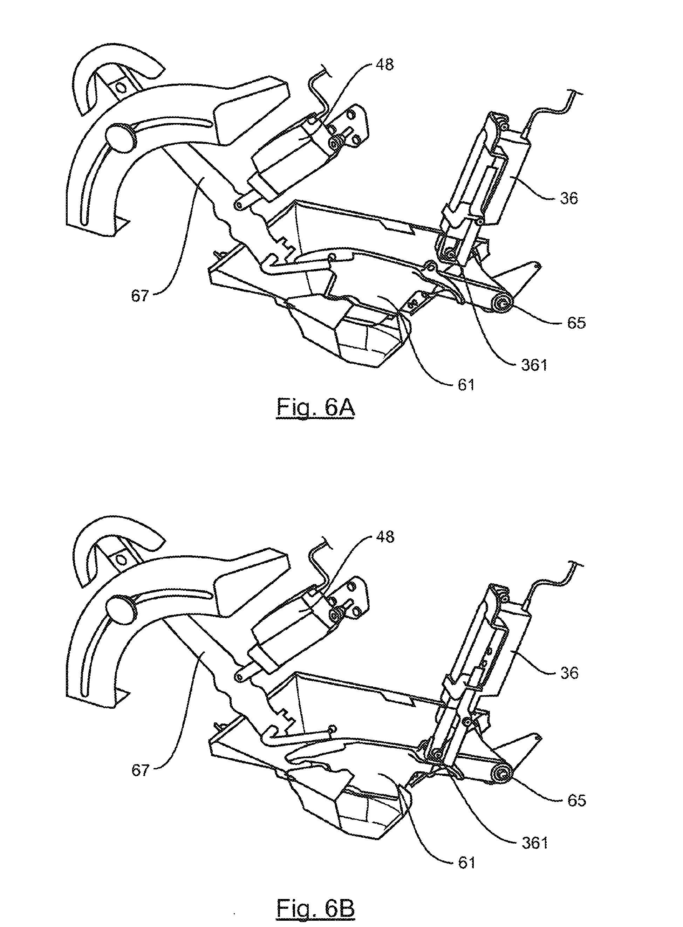

Les figures 6A et 6B illustrent schématiquement un mécanisme d'ouverture des trappes contrôlé par un vérin, selon un mode de réalisation de l'invention. Plus précisément, la figure 6A présente une trappe 61 d'alimentation de l'un des disques, dans la position fermée. Dans cette position, la trappe 61 ferme l'alimentation d'un des disques. Le vérin 36 vient agir, par son extrémité 361, sur la trappe 61, montée mobile en rotation autour d'un axe 65, pour commander la fermeture de l'alimentation.

Des ressorts peuvent être prévus, pour assister le déplacement de la trappe et/ou maintenir celle-ci dans une position souhaitée. Dans le mode de réalisation illustré, un ressort (non illustré) ramène la trappe en position ouverte lorsque l'extrémité 61 du vérin est remontée.

La figure 6B illustre le système de la figue 6A dans la position ouverte. Dans cette position, le vérin 36 est dans une position repliée, et on constate que l'extrémité 361 est remontée, ayant simultanément libérée la trappe 61, qui a pivoté autour de l'axe 65, pour libérer l'ouverture d'alimentation.

Les particules peuvent, alors, s'écouler depuis le distributeur vers le disque.

On note, sur ces figures 6A et 6B, la présence optionnelle d'un second actionneur 48, déjà mentionné, qui agit de façon fine (mais plus lente que le premier actionneur 36) sur la course de la trappe, par l'intermédiaire de la bielle 67 (qui est également équipée d'une poignée pour permettre un réglage manuel).

La figure 7 présente de façon simplifiée un synoptique du procédé de mise en oeuvre de l'invention.

Dans une première étape préalable 71 de paramétrage, on programme la barre de guidage, de façon à prendre en compte les réglages particuliers de l'épandage de particules, et notamment la position et la forme de la nappe (voir figure 2B).

Ainsi, en particulier, dans cette étape de réglage, on va introduire des informations permettant de prendre en compte la largeur de la nappe d'épandage, ou largeur d'épandage, la distance entre la position de l'antenne GPS et le coeur de la nappe générée par chaque disque, et le cas échéant un pourcentage de recouvrement souhaité, notamment dans ne pointe de champ. On règle également le nombre de tronçons, par exemple en le fixant à deux (dans le cas d'un fonctionnement en tout ou rien).

On comprend, au vu des figures 2A et 2B, que ce réglage n'est pas évident. Les réglages rentrés ne seront donc pas, généralement, des informations mesurées ou mesurables par le conducteur lui-même, mais données résultant de l'expérience, qui seront fournies par exemple sous la forme d'abaque, par le producteur du système de l'invention.

La distance entre la position de l'antenne GPS et le coeur de la nappe générée par chaque disque pourra, par exemple, être compris entre 5 et 20 mètres vers l'arrière du tracteur, et entre 3 et 15 mètres sur le côté, pour tenir compte de la projection centrifuge de l'appareil. La distance entre l'attelage du distributeur et le coeur de chaque nappe pourra être une valeur moyenne, variable selon la largeur de travail et le type de pale utilisé. Cette information pourra donc être précisée, par exemple également dans des abaques.

Ensuite, l'épandage (plus généralement la distribution, selon le type de particules) 73, est mis en oeuvre, avec le système de l'invention. Le géoréférencement de la parcelle lors d'un détourage en bordure optionnel 72, ainsi que la connaissance, de la forme de la nappe d'engrais, permettent d'optimiser le recouvrement sur les zones sensibles que sont les bouts de champs et les pointes de champs notamment.

Plus précisément, le module de l'invention reçoit (731) les signaux de contrôle délivrés par la barre de guidage et les moyens de coupure de tronçons, convertit (732) ces signaux, pour contrôler (733) l'ouverture et la fermeture des dispositifs de distribution (et plus généralement, le cas échéant, le degré d'ouverture et éventuellement d'autres réglages).

Ainsi, en bout de champs, grâce aux signaux de contrôle délivrés par un ensemble comprenant une barre de guidage, l'ouverture et la fermeture des trappes de débit sont immédiates et automatisées par l'intermédiaire des vérins contrôlés par le boîtier de l'invention.

Par exemple, en pointe de champs côté détourage, la trappe de débit se ferme automatiquement (figure 6A) lorsque le recouvrement des nappes atteint le seuil limite initialement programmé.

La solution de l'invention permet donc, d'équiper un distributeur de série, avec ou sans électronique particulière, dont les disques ou plateaux sont entraînés par la prise de force du tracteur au moyen de classiques renvois d'angles. Il exploite les informations des barres de guidage disponibles sur le marché. Ainsi, on dispose de façon simple et peu coûteuse, d'un système automatisant les coupures et les réouvertures du débit lors des apports d'engrais granulés ou de semis, se greffant sur des équipements potentiellement déjà présents sur un tracteur, et notamment la barre de guidage, l'antenne GPS et le système de gestion de tronçons.

On apporte ainsi un confort supérieur au conducteur, puisque celui-ci n'a plus à gérer au jugé, l'ouverture et la fermeture des trappes. En outre, en cas d'arrêt de l'ensemble tracteur/distributeur d'engrais l'épandage se coupe automatiquement. Lors d'une manoeuvre ou d'un redémarrage, suite à une pause dans le chantier, le système de l'invention redémarre automatiquement l'épandage à l'endroit optimum.

Par ailleurs, l'invention permet d'améliorer la productivité du travail, et de valoriser de façon optimale l'intrant (engrais par exemple) source de pollution diffuse, et produit coûteux.

L'invention permet également d'homogénéiser la productivité d'une parcelle.

L'invention a notamment été décrite pour une application à l'épandage d'un engrais solide. Il est clair cependant qu'elle peut s'appliquer à la distribution d'autres types de particules, et par exemple les semis, les produits anti-limaces, le sel, les graviers.

Des adaptations spécifiques selon les applications pourront être envisagées. Par exemple, pour un semoir, on peut actionner un vérin fermant la moitié du semoir, diminuer la dose de 50% dans les pointes, et/ou couper le moteur électrique dans les bouts de champ.

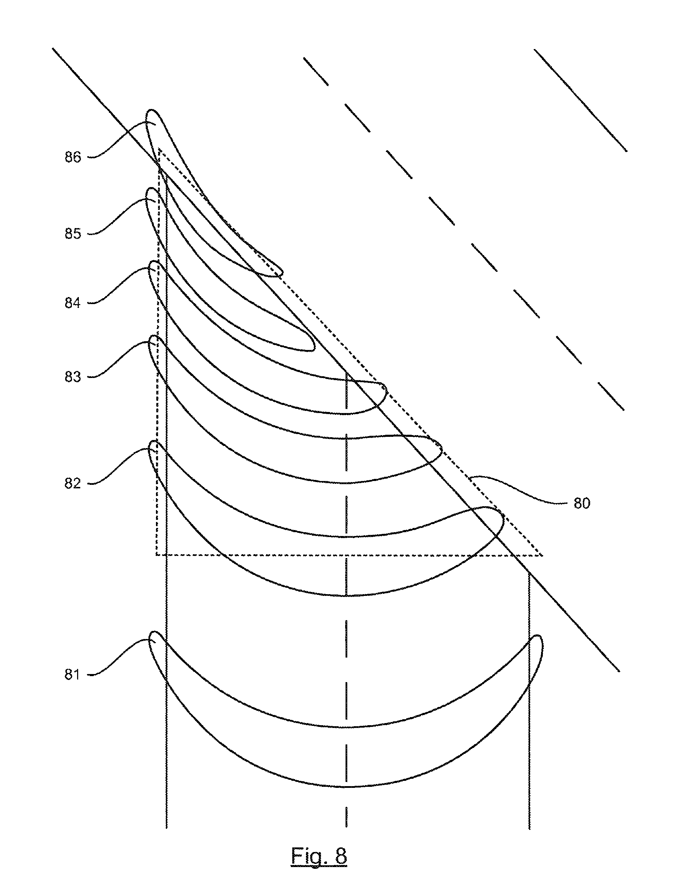

Ainsi, comme illustré sur l'exemple de la figure 8, il est possible de modifier progressivement la forme d'une nappe, pour qu'elle s'adapte notamment à une surface triangulaire 80, correspondant par exemple à un bord de champ en pointe. Dans cet exemple, on considère que la barre de guidage contrôle 6 tronçons de pulvérisation, et délivre donc 6 signaux de contrôle (binaires) distincts d'ouverture ou de fermeture. Selon l'invention, ces 6 signaux de contrôle vont être convertis, pour piloter les disques d'un épandeur, en particulier les moyens qui permettent de contrôler leur alimentation, et notamment la forme de la nappe d'épandage, et la quantité de particules à épandre.

Ainsi, lorsque tous les tronçons sont ouverts, vu de la barre de guidage, le module autonome convertit les 6 signaux d'ouverture en des signaux d'ouverture maximale des deux trappes, et on obtient la zone d'épandage 81, en forme de croissant.

Il est ensuite possible de réduire un côté de cette forme de croissant, comme illustré par la forme 82. Vu de la barre de guidage, la forme triangulaire 80 impose de fermer le tronçon le plus à droite. Le module autonome convertit, ou interprète ce signal de façon à générer deux commandes :
- une commande de modification de l'angle de la goulotte de droite, pour réduire la surface de la zone d'épandage en conséquence ;
- une commande de réduction de la dose de particules délivrées sur le disque (sensiblement d'un tiers), pour prendre en compte la variation de la surface de la zone d'épandage.

Dans le mode de réalisation décrit, c'est la goulotte qui règle la largeur d'épandage. Cette goulotte transfère les particules depuis la sortie de l'orifice de dosage vers les pales du disque concerné, qui vont les accélérer pour les distribuer sur le sol. La variation de position de dépose du produit dans les pales déplace le croissant épandu sur le sol (déplacement angulaire)

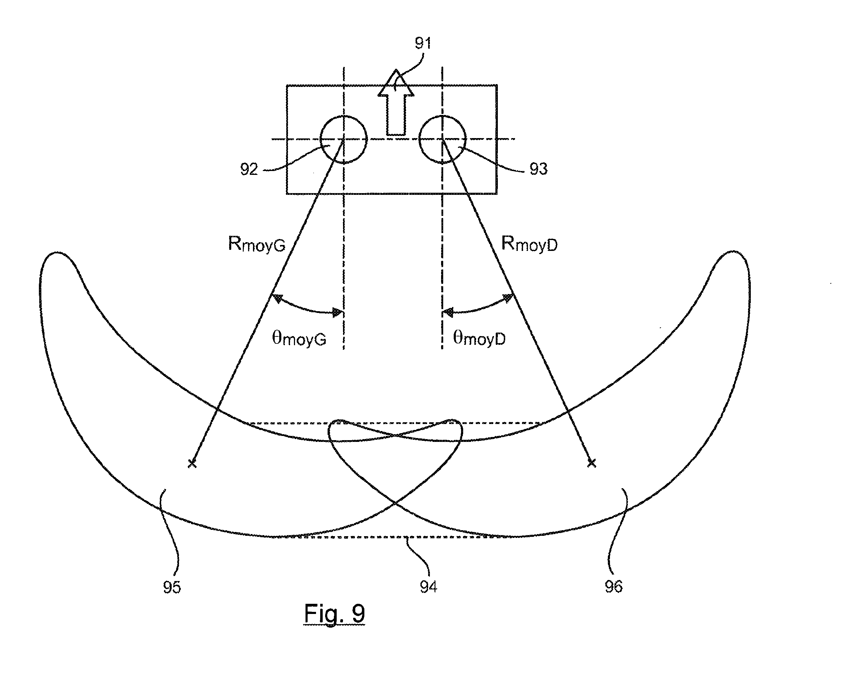

Comme illustré par la figure 9 commentée ci-après, la forme de la nappe d'épandage présente donc une forme générale de croissant (et non une forme rectangulaire comme cela est le cas pour la pulvérisation), correspondant à la combinaison de deux croissants générés par chacun des disques, et dont les surfaces respectives sont contrôlées par le réglage de la goulotte, par exemple en fonction de paramètres angulaires θ_{moyG} et θ_{moyD}, correspondant à un angle moyen d'éjection de l'engrais par rapport à l'axe d'avancement 91.

De la même façon, la fermeture du deuxième tronçon, en partant de la droite, va entraîner une nouvelle modification de l'angle θ_{moyD}, et donc du réglage de la goulotte, pour obtenir la forme 83, et une réduction de la dose.

Lorsque le troisième tronçon est fermé, une commande d'arrêt de distribution (fermeture complète de l'alimentation en particules) est générée, ainsi que, le cas échéant, une commande d'arrêt du disque de droite. Une commande de fermeture rapide de la trappe, destinée au vérin 36₂ peut également être émise.

Le même principe peut être mis en oeuvre progressivement, pour le disque de gauche, en fonction des fermetures successives des tronçons, vues de la barre de guidage, pour passer successivement aux formes 84, 85 puis 86. Au fur et à mesure que les tronçons sont fermés, les doses sont réduites en proportion, et la goulotte est déplacée. On peut ainsi noter la position particulière de la nappe 86, qui permet de bien atteindre le coin du triangle 80, la nappe ayant légèrement pivoté autour d'un axe s'étendant sensiblement au niveau du point d'accrochage de l'épandeur au tracteur.

On peut noter, sur la figure 8, que pour le disque de droite, la nappe tourne vers l'intérieur de la machine (vers l'arrière) tandis que, pour assurer la continuité de la réduction de largeur, le disque gauche fait tourner progressivement la courbe vers l'extérieur.

Ainsi, dans ce cas particulier, la conversion effectuée par le module autonome peut être la suivante :

| Signaux de contrôle de la barre de guidage | Dose du disque de gauche | θ_{moyG} | Vérin 36₁ | Dose du disque de droite | θ_{moyD} | Vérin 36₂ |
|---|---|---|---|---|---|---|
| 111111 | 100 % | 30° | ON | 100 % | -30° | ON |
| 111110 | 100 % | 30° | ON | 66 % | -25° | ON |
| 111100 | 100 % | 30° | ON | 33 % | -21° | ON |
| 111000 | 100% | 30° | ON | 0% | -30° | OFF |
| 110000 | 66 % | 35° | ON | 0 % | -30° | OFF |
| 100000 | 33 % | 42° | ON | 0 % | -30° | OFF |
| 000000 | 0 % | 30° | OFF | 0 % | -30° | OFF |
| 000001 | 0 % | 30° | OFF | 33 % | -42° | ON |
| 000011 | 0 % | 30° | OFF | 66 % | -35° | ON |
| 000111 | 0 % | 30° | OFF | 100% | -30° | ON |
| 001111 | 33 % | 21° | ON | 100 % | -30° | ON |
| 011111 | 66 % | 25° | ON | 100 % | -30° | ON |

Sur ce tableau, le signal de contrôle délivré par la barre de guidage est un signal binaire de 6 bits, valant 1 lorsque le tronçon correspondant (en associant un bit à un tronçon, le bit de poids fort correspondant au tronçon le plus à gauche) doit être ouvert et 0 quand il doit être fermé. Bien entendu, le nombre de tronçons est indicatif, et il peut y avoir 8, 10 tronçons ou plus.

La conversion de ce signal de commande permet donc la génération de six commandes distinctes, pour les doses de produits délivrés à chaque disque, les angles θ_{moyG} et θ_{moyD}, correspondant à un angle moyen d'éjection de l'engrais par rapport à l'axe d'avancement 91 et une commande des vérins de contrôle des trappes d'alimentation (ON : trappe ouverte ; OFF : trappe fermée), et optionnellement, une commande de chaque moteur.

Il est à noter que dans ce mode de réalisation, alors que les tronçons sont pilotés en « tout ou rien », les quantités de particules délivrées sont réglables, en non contrôlés également en « tout ou rien ».

Bien sûr, il ne s'agit ici que d'un exemple, et d'autres conversions sont envisageables, en fonction des besoins des systèmes de distribution de particules mis en oeuvre. Ainsi, dans le cas où on choisit de contrôler en « tout ou rien » chacun des disques, la conversion peut être simplifiée, par exemple sous la forme suivante :

| Signaux de contrôle de la barre de guidage | Dose du disque de gauche | Vérin 36₁ | Dose du disque de droite | Vérin 36₂ |
|---|---|---|---|---|
| 111111 | 100 % | ON | 100 % | ON |
| 111110 | 100 % | ON | 100 % | ON |
| 111100 | 100 % | ON | 100 % | ON |
| 111000 | 100 % | ON | 0 % | OFF |
| 110000 | 100 % | ON | 0 % | OFF |
| 100000 | 100 % | ON | 0 % | OFF |
| 000000 | 0 % | OFF | 0 % | OFF |
| 000001 | 0 % | OFF | 100 % | ON |
| 000011 | 0 % | OFF | 100 % | ON |
| 000111 | 0 % | OFF | 100 % | ON |
| 001111 | 100 % | ON | 100 % | ON |
| 011111 | 100 % | ON | 100 % | ON |

D'autres réglages peuvent être mis en oeuvre, toujours en fonction du signal de contrôle des tronçons, selon les modes de réalisation, par exemple pour la vitesse, et/ou l'inclinaison des disques, la position des goulottes amenant les particules vers les disques,...

Comme on le voit sur la figure 9, l'épandage de particules produit au sol, lorsque l'on utilise deux disques 92 et 93, une forme générale de croissant 94, correspondant à la combinaison des deux sous-croissants 95 et 96, générés respectivement par les disques 92 et 93. Selon l'invention, on peut prendre en compte, pour la génération des différentes commandes, cette forme de croissant, et non simplement, et classiquement, une surface d'épandage estimée rectangulaire. En effet, bien que l'on sache que la forme résultant de l'épandage est sensiblement en croissant, la plupart des systèmes connus l'assimile, pour le contrôle des moyens d'épandage, à un rectangle, ce qui conduit à des approximations importantes, et donc à des surdosages et/ou des épandages dans des zones où cela n'est pas nécessaire.

En revanche, selon l'invention, et par exemple dans le mode de réalisation de la figure 8, on peut contrôler finement l'épandage, notamment dans les pointes, en considérant lors du traitement des données, que la nappe résultante présentera cette forme de croissant.

Comme expliqué plus haut, le traitement peut viser à adapter la forme (zone de couverture) de la nappe et sa position, par exemple en définissant des coordonnées polaires, et notamment les angles θ_{moyG} et θ_{moyd} décrits précédemment. Dans cet exemple précédent, les rayons R_{moyG} et R_{moyD} (distance entre le centre du disque et le milieu du sous-croissant correspondant) étaient considérés fixes. Il est cependant possible de prévoir qu'ils soient variables, en fonction du signal de contrôle. Cette variation peut notamment être obtenue en modifiant la vitesse du disque (le rayon augmente si la vitesse augmente) et/ou l'inclinaison des disques.

Bien sûr, ce traitement n'est pas direct, par rapport aux commandes binaires des tronçons d'un pulvérisateur, mais nécessitent une conversion particulière et non triviale, comme illustré par les tableaux d'exemple ci-dessus.

## Revendications

1. Système de distribution de particules pour machine agricole comprenant au moins deux distributeurs de particules équipés chacun d'au moins un dispositif d'alimentation dont l'ouverture et la fermeture sont contrôlées par un premier actionneur (36₁, 36₂),
**caractérisé en ce qu'**il comprend un module autonome de pilotage automatique (35) de l'ouverture et de la fermeture desdits dispositifs d'alimentation, recevant des signaux de contrôle de pulvérisation délivrés par un ensemble comprenant une barre de guidage (32) alimentée par des moyens de géolocalisation (31) et des moyens de coupure de tronçons (33), et destinés à contrôler des pulvérisateurs, et comprenant des moyens de conversion desdits signaux de contrôle de pulvérisation en des commandes d'ouverture et de fermeture desdits premiers actionneurs (36₁, 36₂) des distributeurs de particules.

2. Système de distribution de particules selon la revendication 1, **caractérisé en ce qu'**il comprend également des moyens de pilotage manuel de l'ouverture et de la fermeture desdits dispositifs d'alimentation (36₁, 36₂).

3. Système de distribution de particules selon l'une quelconque des revendications 1 et 2, **caractérisé en ce que** ledit module autonome (35) est apte à délivrer une commande d'ouverture totale, une commande de fermeture totale et au moins une commande d'ouverture partielle de chacun des dispositifs d'alimentation, de façon à permettre un contrôle du débit desdites particules.

4. Système de distribution de particules selon l'une quelconque des revendications 1 à 3, **caractérisé en ce qu'**il comprend des moyens de connexion sélective d'un faisceau (47) de câbles issu de ladite barre de guidage (32) d'une part à des moyens de contrôle desdits pulvérisateurs, et d'autre part audit module de pilotage automatique (35).

5. Système de distribution de particules selon l'une quelconque des revendications 1 à 4, **caractérisé en ce que**, ledit système comprenant un dispositif de réglage (48) de la largeur de la distribution,
ledit module autonome (35) est apte à délivrer une commande d'ouverture totale ou partielle et/ou une commande de fermeture totale ou partielle,
ledit module autonome (35) pouvant contrôler des actionneurs secondaires (48₃, 48₄) agissant sur lesdits dispositifs de réglage de largeur de distribution.

6. Module autonome de pilotage automatique (35) de la distribution de particules pour machine agricole comprenant au moins deux distributeurs de particules équipés chacun d'au moins un dispositif d'alimentation dont l'ouverture et la fermeture sont contrôlées par un premier actionneur (36₁, 36₂)
**caractérisé en ce qu'**il contrôle l'ouverture et la fermeture desdits dispositifs d'alimentation, en fonction des signaux de contrôle de pulvérisation délivrés par une barre de guidage (32) alimentée par des moyens de géolocalisation (31) et des moyens de coupure de tronçons (33), destinés à contrôler des pulvérisateurs, et **en ce qu'**il comprend des moyens de conversion desdits signaux de contrôle de pulvérisation en des commandes d'ouverture et de fermeture desdits premiers actionneurs des distributeurs de particules.

7. Module de pilotage automatique de la distribution de particules selon la revendication 6, **caractérisé en ce qu'**il comprend des moyens de pilotage manuel de l'ouverture et de la fermeture desdits dispositifs d'alimentation.

8. Module de pilotage automatique de la distribution de particules selon l'une quelconque des revendications 6 et 7, **caractérisé en ce qu'**il comprend des moyens de gestion de la fin de course et de détection de panne de chacun desdits actionneurs.

9. Module de pilotage automatique de l'épandage de particules selon l'une quelconque des revendications 6 à 8, **caractérisé en ce qu'**il comprend des moyens d'indication de la position ouverte ou fermée desdits dispositifs d'alimentation, et/ou l'indication du mode de fonctionnement courant, manuel ou automatique, et/ou la présence d'un défaut.

10. Procédé de distribution de particules mettant en oeuvre un module de pilotage automatique selon l'une quelconque des revendications 6 à 9, pour une machine agricole comprenant au moins deux distributeurs de particules équipés chacun d'au moins un dispositif d'alimentation dont l'ouverture et la fermeture sont contrôlés par un premier actionneur (36₁, 36₂),
**caractérisé en ce qu'**il comprend les étapes suivantes :
- réception de signaux de contrôle délivrés par une barre de guidage (32) alimentée par des moyens de géolocalisation (31) et des moyens de coupure de tronçons (33), destinés à contrôler des pulvérisateurs ;
- conversion desdits signaux de contrôle pulvérisation en des commandes d'ouverture et de fermeture desdits premiers actionneurs (36₁, 36₂);
- ouverture et/ou fermeture desdites trappes en fonction desdites commandes.

11. Procédé de distribution de particules selon la revendication 10, **caractérisé en ce qu'**il comprend une étape préalable de réglage de ladite barre de guidage (32), dans laquelle les paramètres normalement destinés au contrôle de pulvérisateurs sont adaptés à une nappe d'épandage de particules ou à une nappe de distribution d'un semoir, par exemple un semoir à céréales.

12. Procédé de distribution de particules selon la revendication 11, **caractérisé en ce que** ladite étape de réglage comprend la configuration d'au moins les paramètres suivants :
- largeur de la nappe ;
- distance entre la position d'une antenne de géolocalisation et le coeur de la nappe générée par chacun desdits disques ;
- pourcentage de recouvrement souhaité dans une pointe de champ ;
- temps d'anticipation de la réaction des premiers actionneurs (36₁, 36₂);
- le nombre de tronçons.

13. Procédé de distribution de particules selon l'une quelconque des revendications 10 à 12, **caractérisé en ce qu'**il comprend une étape de contrôle de l'ouverture desdits dispositifs de distribution, de façon que celle-ci puisse prendre au moins une position d'ouverture intermédiaire, en fonction desdits signaux de contrôle.

## Claims

1. Particle distribution system for an agricultural machine comprising at least two particle distributors which are each provided with at least one supply device, the opening and closing of which are controlled by a first actuator (36₁, 36₂),
**characterised in that** the particle distribution system comprises an independent module (35) which is for automatically controlling the opening and closing of the supply devices and which receives spray control signals which are provided by an assembly comprising a guide bar (32), the guide bar being supplied by geolocation means (31) and portion cutting means (33), the control signals being intended to control sprayers, and the independent module comprising means for converting the spray control signals into commands for opening and closing the first actuators (36₁, 36₂) of the particle distributors.

2. Particle distribution system according to claim 1, **characterised in that** the particle distribution system further comprises means for manually controlling the opening and closing of the supply devices (36₁, 36₂).

3. Particle distribution system according to either claim 1 or claim 2, **characterised in that** the independent module (35) is capable of providing a command for complete opening, a command for complete closure and at least one command for partial opening of each of the supply devices, in order to allow control of the flow of the particles.

4. Particle distribution system according to any one of claims 1 to 3, **characterised in that** the particle distribution system comprises means for selectively connecting a bundle (47) of cables from the guide bar (32) on the one hand to control means of the sprayers and on the other hand to the automatic control module (35).

5. Particle distribution system according to any one of claims 1 to 4, **characterised in that**, the system comprising a device (48) for adjusting the width of the distribution,
the independent module (35) is capable of providing a command for complete or partial opening and/or a command for complete or partial closure,
the independent module (35) being able to control secondary actuators (48₃, 48₄) acting on the devices for adjusting the width of distribution.

6. Independent module (35) for automatic control of the distribution of particles for an agricultural machine comprising at least two particle distributors which are each provided with at least one supply device, the opening and closing of which are controlled by a first actuator (36₁, 36₂),
**characterised in that** the independent module controls the opening and closing of the supply devices in accordance with the spray control signals which are supplied by a guide bar (32), the guide bar being supplied by geolocation means (31) and portion cutting means (33), the control signals being intended to control sprayers, and
**in that** the independent module comprises means for converting the spray control signals into commands for opening and closing the first actuators of the particle distributors.

7. Automatic particle distribution control module according to claim 6, **characterised in that** the control module comprises means for manually controlling the opening and closing of the supply devices.

8. Automatic particle distribution control module according to either claim 6 or claim 7, **characterised in that** the control module comprises end of travel control means and malfunction detection means for each of the actuators.

9. Automatic particle spreading control module according to any one of claims 6 to 8, **characterised in that** it comprises means for indicating the open or closed position of the supply devices, and/or indicating the current operating mode, manual or automatic, and/or the presence of a fault.

10. Particle distribution method implementing an automatic control module according to any one of claims 6 to 9, for an agricultural machine comprising at least two particle distributors which are each provided with at least one supply device, the opening and closing of which are controlled by a first actuator (36₁, 36₂),
**characterised in that** the method comprises the following steps:
- receiving control signals which are provided by a guide bar (32) supplied by geolocation means (31) and portion cutting means (33) and which are intended to control sprayers;
- converting the spray control signals into commands for opening and closing the first actuators (36₁, 36₂);
- opening and/or closing the flaps in accordance with the commands.

11. Particle distribution method according to claim 10, **characterised in that** the method comprises a prior step for adjusting the guide bar (32) in which the parameters that are normally intended to control sprayers are adapted to a particle spreading layer or a distribution layer of a sowing machine, for example a cereal sowing machine.

12. Particle distribution method according to claim 11, **characterised in that** the adjustment step comprises the configuration of at least the following parameters:
- width of the layer;
- distance between the position of a geolocation antenna and the centre of the layer generated by each of the disks;
- percentage of coverage desired in a field tip;
- time for anticipating the reaction of the first actuators (36₁, 36₂),
- the number of portions.

13. Particle distribution method according to any one of claims 10 to 12, **characterised in that** the method comprises a step of controlling the opening of the distribution devices, so that they can take up at least one intermediate opening position, in accordance with the control signals.

## Patentansprüche

1. System für die Verteilung von Partikeln für landwirtschaftliche Maschinen, umfassend mindestens zwei Partikelverteiler, die jeweils mit mindestens einer Zuführvorrichtung versehen sind, deren Öffnen und Schließen durch ein erstes Betätigungsorgan (36₁, 36₂) gesteuert werden, **dadurch gekennzeichnet, dass** es ein autonomes Modul zur automatischen Steuerung des Öffnens und des Schließens der Zuführvorrichtung umfasst, das Steuersignale für das Zerstäuben von einer Einheit, die eine Spurführung (32), welche von Geolokalisierungsmitteln (31) und Mitteln zum Durchführen einer Teilbreitenschaltung (33) gespeist wird und dazu bestimmt ist, Zerstäuber zu steuern, und Mittel zum Konvertieren der Zerstäubungssteuersignale in Steuerbefehle für das Öffnen und Schließen der ersten Betätigungsorgane (36₁, 36₂) der Partikelverteiler umfasst.

2. System für die Verteilung von Partikeln gemäß Anspruch 1, **dadurch gekennzeichnet, dass** es weiterhin manuelle Steuermittel für das Öffnen und Schließen der Zuführvorrichtung (36₁, 36₂) aufweist.

3. System für die Verteilung von Partikeln gemäß einem der Ansprüche 1 bis 2, **dadurch gekennzeichnet, dass** das autonome Modul (35) in der Lage ist, einen Steuerbefehl zum vollständigen Öffnen, einen Steuerbefehl zum vollständigen Schließen und mindestens einen Steuerbefehl zum teilweise Öffnen jeder der Zuführvorrichtungen auszugeben, um eine Kontrolle über den Partikeldurchsatz zu ermöglichen.

4. System für die Verteilung von Partikeln gemäß einem der Ansprüche 1 bis 3, **dadurch gekennzeichnet, dass** es Mittel zum selektiven Verbinden eines Kabelstrangs (47) aus der Teilbreitenschaltung (33) einerseits mit den Kontrollmitteln der Zerstäuber und andererseits mit dem Modul zum automatischen Steuern umfasst.

5. System für die Verteilung von Partikeln gemäß einem der Ansprüche 1 bis 4, **dadurch gekennzeichnet, dass** das System eine Regelvorrichtung (48) für die Verteilbreite umfasst, wobei das autonome Modul (35) in der Lage ist, einen Steuerbefehl zum vollständigen Öffnen und/oder einen Steuerbefehl zum vollständigen oder teilweisen Schließen auszugeben, wobei das autonome Modul (35) untergeordnete Betätigungsorgane (48₃, 48₄), die auf die Regelvorrichtung für die Verteilbreite einwirken, steuern kann.

6. Autonomes Modul (35) zum automatischen Steuern der Verteilung von Partikeln für landwirtschaftliche Maschinen, umfassend mindestens zwei Partikelverteiler, die jeweils mit mindestens einer Zuführvorrichtung versehen sind, deren Öffnen und Schließen durch ein erstes Betätigungsorgan (36₁, 36₂) gesteuert werden, **dadurch gekennzeichnet, dass** es das Öffnen und Schließen der Zuführvorrichtung in Abhängigkeit von Zerstäubersteuersignalen steuert, die von einer Spurführung (32) ausgegeben werden, welche von Geolokalisierungsmitteln (31) und Mitteln (33) zum Durchführen einer Teilbreitenschaltung gespeist wird, die dazu dienen, die Zerstäuber zu steuern, und dass es Mittel zum Konvertieren der Zerstäubungssteuersignale in Steuerbefehle zum Öffnen oder Schließen der Betätigungsorgane der Partikelverteiler umfasst.

7. Modul zum automatischen Steuern der Verteilung von Partikeln gemäß Anspruch 6, **dadurch gekennzeichnet, dass** es Mittel zum manuellen Steuern des Öffnens und des Schließens der Zuführvorrichtung umfasst.

8. Modul zum automatischen Steuern der Verteilung von Partikeln gemäß einem der Ansprüche 6 bis 7, **dadurch gekennzeichnet, dass** es Mittel für die Endabschaltung und die Pannendetektion für jedes der Betätigungsorgane aufweist.

9. Modul zum automatischen Steuern der Verteilung von Partikeln gemäß einem der Ansprüche 6 bis 8, **dadurch gekennzeichnet, dass** es Mittel zum Anzeigen der geöffneten bzw. geschlossenen Stellung der Zuführeinrichtungen umfasst und/oder zum Anzeigen der gegenwärtigen Funktionsweise, manuell oder automatisch und/oder das Vorliegen eines Fehlers umfasst.

10. Verfahren zum Verteilen von Partikeln unter Verwendung eines Moduls zum automatischen Steuern gemäß einem der Ansprüche 6 bis 9 für eine landwirtschaftliche Maschine, die mindestens zwei Partikelverteiler aufweist, die jeweils mindestens eine Zuführvorrichtung aufweisen, deren Öffnen und Schließen von einem ersten Betätigungsorgan (36₁, 36₂) gesteuert werden, **gekennzeichnet durch** die folgenden Verfahrensschritte :
• Empfang von Steuersignalen, die von einer Bahnsteuerung (32) ausgegeben werden, welche von Geolokalisierungsmitteln (31) und Mitteln (33) zum Durchführen einer Teilbreitenschaltung gespeist wird, die dazu dienen, die Zerstäuber zu steuern ;
• Konvertieren der Zerstäubungssteuersignale in Steuerbefehle zum Öffnen oder Schließen der ersten Betätigungsorgane (36₁, 36₂) ;
• Öffnen und/oder Schließen der Klappen in Abhängigkeit von den Steuerbefehlen.

11. Verfahren zumn Verteilen von Partikeln gemäß Anspruch 10, **dadurch gekennzeichnet, dass** es einen ersten Schritt der Regelung der Bahnsteuerung (32) umfasst, in dem die die normalerweise zum Steuern von Zerstäubern bestimmten Parameter auf einen Partikelteppich oder einen Saatgutteppich angepasst werden, beispielsweise auf einen Getreidesaatgutteppich.

12. Verfahren zum Verteilen von Partikeln gemäß Anspruch 11, **dadurch gekennzeichnet, dass** der Schritt der Regelung das Konfigurieren mindestens der folgenden Parameter umfasst :
• Breite des Saatgutteppichs ;
• Abstand zwischen einer Geolokalisierungsantenne und dem Zentrum des von beiden Scheiben gebildeten Teppichs ;
• in einer Feldspitze gewünschter Abdeckungsgrad ;
• Vorlaufzeit der Reaktion der ersten Betätigungsorgane (36₁, 36₂) ;
• Zahl der Teilbreiten.

13. Verfahren zum Verteilen von Partikel gemäß einem der Ansprüche 10 bis 12, **dadurch gekennzeichnet, dass** es einen Schritt des Kontrollierens der Öffnung der Verteilvorrichtungen umfasst, so daß diese in Abhängigkeit von den Steuersignalen zumindest eine teilweise Öffnungsstellung einnehmen können.
